# EUROPÄISCHE PATENTSCHRIFT

(11) **EP 0 876 637 B1**
(45) Veröffentlichungstag und Bekanntmachung des Hinweises auf die Patenterteilung: **09.01.2002**
(21) Anmeldenummer: 97900581.6
(22) Anmeldetag: 09.01.1997
(51) Int. Cl.: G02F 1/13

(54) **MESSEINRICHTUNG FÜR OPTISCHE EIGENSCHAFTEN EINER ANZEIGE**
MEASUREMENT DEVICE FOR DETERMINING THE OPTICAL CHARACTERISTICS OF A DISPLAY
DISPOSITIF DE MESURE DES PROPRIETES OPTIQUES D'UN DISPOSITIF D'AFFICHAGE

(30) Priorität: 28.01.1996 DE 19602862
(43) Veröffentlichungstag der Anmeldung: 11.11.1998
(73) Patentinhaber: Autronic-Melchers GmbH, 76229 Karlsruhe (DE)
(72) Erfinder: BECKER, Michael, D-76135 Karlsruhe (DE)
(86) Internationale Anmeldenummer: EP9700065
(87) Internationale Veröffentlichungsnummer: WO9727510

(56) Entgegenhaltungen:
- EP-A- 0 286 529
- EP-A- 0 721 136
- US-A- 4 272 196
- JAPANESE JOURNAL OF APPLIED PHYSICS, Bd. 21, Nr. 10, Oktober 1982, Seiten L616-L618, XP002028154 K.MIYOSHI ET AL.: "Time Dependent Observation of the Conoscopic Figures of Twisted Liquid Crystal" in der Anmeldung erwähnt

## Beschreibung

Die Erfindung beruht auf den Zusammenhängen, die unter Bezugnahme auf A.R. Kmetz "Characterization and Optimization of Twisted Nematic Displays for Multiplexing" [SID 1978 Digest pp. 70/71] von R.A. Cremers vermittelt werden in seiner Dissertation "Ein automatisches Meßsystem zur objektiven Bewertung von Flüssigkristall-Anzeigen" [Fortschrittsberichte der VDI-Zeitsenriften; Reihe 8, Meß-, Steuerungs- und Regelungstechnik, Nr. 37/1981], betreffend die grundsätzliche geometrische Ubereinstimmung zwischen den Konturen von konoskopisch erzeugten zweidimensionalen Interferenzfiguren und den daraus ausgemessenen blickwinkelabhängigen Helligkeits- bzw Kontrastkurven (dort Seite 59). Denn ein Flächenelement einer ebenen Anzeigefläche (vorzugsweise einer Flüssigkristallanzeige), das von einem konischen Bündel paralleler Elementarstrahlen durchstrahlt wird und sich dabei in der oder dicht bei der objektseitigen Brennebene einer kollimierenden Optik befindet, erzeugt in der bildseitigen Brennebene eine Interferenzfigur, auch Fouriertransformierte genannt, deren zweidimensionaler Intensitätsverlauf die Abhängigkeit des Transmissionsgrades des betrachteten (d.h. durchstrahlten) Fläcnenelementes der Anzeige von der Betrachtungsrichtung (also von der Durchstrahlungsrichtung) darstellt.

Diese zweidimensionale Intensitätsverteilung der Interferenzfigur kann durch unterschiedliche Graustufen oder durch Linien gleicher Intensität (Höhen- oder Konturlinien) dargestellt werden. Jeder Punkt in der Interferenzfigur entspricht also eindeutig einer Betrachtungsrichtung bzw. einer Richtung der Lichtausbreitung. Dabei repräsentiert der Abstand des Punktes zur optischen Achse den Neigungswinkel der Lichtausbreitung gegen die optische Achse, und der Azimut ist durch die Projektion der Lichtausbreitungsrichtung auf eine zur optischen Achse senkrechte Ebene gegeben (vgl. Cremers a.a.O. Seiten 19/20).

Die Größe des oben genannten Flächenelementes der Anzeigefläche ist durch die Projektion des Querschnittes einer der parallelen Elementarstrahlen auf die Anzeigefläche definiert. Das Flächenelement, dessen richtungsabhängige Transmissionseigenschaften in der Interferenzfigur abgebildet sind, kann kleiner als ein einzelnes Bildelement (sog. Pixel) der Anzeige sein, es, kann sich aber auch über mehrere solcher Bildelemente erstrecken. Gemäß den oben referierten Zusammenhängen läßt sich mittels eines Detektorsystemes aus der Interferenzfigur für jeden elektrischen Ansteuerungszustand der Anzeige, also für jeden entsprechenden optischen Zustand (z.B. durchlässig = hell, undurchlässig = dunkel), die Abhängigkeit der Transmission des Anzeigeelementes von der Ausbreitungsrichtung des durchstrahlenden Lichts erfassen.

Entspricht die spektrale Empfindlichkeit des Detektorsystemes (einschließlich seiner Projektions-Optik, s.u.) der spektralen Empfindlichkeit des Auges, so läßt sich nach oben genannter Methode die Leuchtdichte des Anzeigeelementes in Abhängigkeit von der Lichtausbreitungsrichtung ermitteln, die antiparallel zur Betrachtungsrichtung ist. Bildet man den Quotienten aus den Leuchtdichten eines "hell gesteuerten" und eines "dunkel gesteuerten" Anzeigeelementes für jeweils die gleiche Lichtausbreitungsrichtung, so läßt sich auf diese Weise der Leuchtdichte-Kontrast des Anzeigeelementes ermitteln. Entspricht jene spektrale Detektor-Empfindlichkeit jedoch nicht der spektralen Hellempfindlichkeit des Auges, so ergeben sich allgemein, in Abhängigkeit von der speziellen gerade gegebenen spektralen Detektorempfindlichkeit, Strahldichteverteilungen, bzw. als Quotienten daraus Strahldichte-Kontrastwerte. Die Visualisierung der Abhängigkeit dieser Kontraste von der Betrachtungsrichtung erfolgt, analog zur oben beschriebenen konoskopischen Darstellung des Transmissionsgrades, wieder durch Graustufen oder durch Konturlinien (Höhenlinien) in einem polaren Koordinatensystem.

In Erweiterung dieser Zusammenhänge, die sich oben speziell auf die Durchstrahlung des betrachteten Flächenelementes der Anzeige beziehen (transmissiver Betrieb der Anzeige), lassen sich nach der beschriebenen Vorgehensweise auch Strahldichteverteilungen und Leuchtdichteverteilungen bzw. die entsprechenden Kontraste bei reflektierenden sowie bei emittierenden (also bei aktiven) Anzeigen ermitteln. Es ist jedoch zu beachten, daß beim reflektiven Betrieb von Anzeigen die Beleuchtung mit einem konischen Bündel von parallelen Elementarstrahlen durch die gleicne Optik erfolgen muß, mit der auch die Interferenzfigur erzeugt wird; wie es sich mit halbdurchlässigen Spiegeln, Strahlteilerplatten, Strahlteilerwürfeln u.dgl. realisieren läßt.

Bei der Auswertung einer konoskopisch generierten Interferenzfigur mittels eines einkanaligen Detektors würde eine Integration über die Gesamtheit aller Punkte der Interferenzfigur und somit über alle Betrachtungsrichtungen erfolgen, also der interessierende Zusammenhang von beispielsweise Leuchtdichte und Kontrast in Abhängigkeit von der Betrachtungsrichtung verlorengehen, da dann nur ein Mittelwert ermittelt werden würde (Cremers a.a.O. Seiten 22/23). Deshalb wird in der zitierten Dissertation zur Kontrastermittlung für jeden der beiden Schaltzustände "EIN" und "AUS" das rückwärtig durchstrahlte Anzeigeelement im Fernfeld betrachtet, nämlich längs einer Kugelschalenfläche aus gegeneinander versetzten Richtungen mittels eines einkanaligen Detektors Punkt für Punkt abgetastet, um so den Zusammenhang zwischen der Intensitätsverteilung und der Betrachtungsrichtung der Elementarfläche der Anzeige aufzunehmen. Ein solcher Meßvorgang ist natürlich zeitaufwendig und bedingt einen teuren, langzeitstabilen Meßaufbau.

Deshalb wird von Miyoshi et.al. in "Time Dependent Observation of the Conoscopic Figures of Twisted Liquid Crystal" [Japanese Journal of Applied Physics" Vol.21 No.10, October 1982, pp L616 - L618] eine quasi-parallel arbeitende Raster-Auswertung vorgeschlagen. Dafür wird die konoskopisch erzeugte Interferenzfigur mittels einer weiteren Optik in verkleinerter Form auf einen zweidimensionalen Vielkanal-Detektor (in Form einer Videokamera mit 256 mal 256 Bildelementen) projiziert. Nach Zwischenspeichern der damit erhaltenen Intensitätswerte können durch Quotientenbildung mit den entsprechenden Intensitätswerten für den anderen Schaltzustand der Anzeige in Abhängigkeit von der spektralen Empfindlichkeit der Optik analog zur oben beschriebenen vorgehensweise Leuchtdichtekontrast- oder jedenfalls Strahldichtekontrast-Verteilungen über den Betrachtungsrichtungen des Flächenelementes der Anzeige ermittelt werden. In Hinblick auf die Abtastzeit für ein Vollbild nach der Fernsehnorm, die bei 16 ms und somit im Bereich der Schaltzeiten einer Flüssigkristallanzeige liegt, beschreiben schon Miyoshi et.al. [a.a.O.] die generelle Problematik der Messung des dynamischen Verhaltens von dünnen flüssigkristallinen Schichten mit Vielkanal-Detektoren, deren Abtastzeiten im Bereiche der Eigenzeitkonstanten der zu messenden Schalteffekte liegen.

Eine Meßeinrichtung, bei der die Strahldichte-Verteilung der konoskopisch generierten Interferenzfigur bei unterschiedlichen elektrischen Ansteuerzuständen des Anzeigeelementes mittels eines zweidimensionalen Detektor-Arrays hinter einer zweiten oder Projektions-Optik aufgenommen wird, um daraus die Abhängigkeit des visuellen Kontrastes von der Betrachtungsrichtung zu berechnen, ist dann auch wieder Gegenstand des hier gattungsbildenden Europäischen Patentes 0 286 529 (CEA / Deutsch) mit Priorität vom 08.04.87 geworden, in dem die zugrundeliegenden, aus obigem Stande der Technik bekannten Zusammenhänge noch einmal dargestellt sind. Beschrieben wird dann allerdings nur die meßtechnische Erfassung des Kontrastes im optisch eingeschwungenen Zustand der Anzeige - ohne Berücksichtigung dynamischer Aspekte (Schaltzeiten u.dgl.) und ohne Berücksichtigung spektraler Aspekte (Verteilung des von der Anzeige durchgelassenen bzw. reflektierten Lichtes, die grundlegend für eine exakte farbmetrische Bewertung der Anzeige wäre). Darüberhinaus von Nachteil bei dieser Meßeinrichtung mit ihrer zusätzlichen Abbildungs-Optik ist der hohe apparative Aufwand, um zu vermeiden, daß eine auf Abbildungsfehler des Projektionssystemes zurückzuführende Unschärfe zum "Verschmieren" der auszumessenden Interferenzfigur und somit zu einem Verlust an räumlicher Auflösung führt, die schnell unter eine für die Meßaufgabe vorgegebene Auflösungs-Toleranzgrenze fallen kann.

Durch Quotientenbildung von Leuchtdichten, die aufeinanderfolgenden elektrischen Ansteuerungszuständen einer Anzeige zugeordnet sind, läßt sich also die winkelabhängige Verteilung nicht nur allgemein des Strahldichte-Kontrasts, sondern auch des auf die spektrale Empfindlichkeit des menschlichen Auges abgestellten Leuchtdichte-Kontrasts für die unterschiedlichen Betrachtungsrichtungen durch Ausmessen der Interferenzfigur bestimmen. Dafür muß aber die spektrale Empfindlichkeit des zweidimensionalen Vielkanal-Detektors (z.B. eines Vidicons, eines CCD-Arrays o.dgl.) durch speziell, für den jeweiligen Detektor unter Berücksichtigung auch seiner Abbildungsoptik, optimierte Filter (meist vielschichtige Farbglasfilter) möglichst genau an die spektrale Hell-Empfindlichkeit des menschlichen Auges angepaßt werden (vgl. CIE-Norm). In der Praxis liegt dabei das Problem in der Notwendigkeit der spektralen Anpassung nicht nur eines einzelnen Detektors, sondern gleich eines ganzen Arrays aus einer Vielzahl von Einzelelementen (z.B. 2048 x 2048 Stück bei modernen CCD-Arrays), weil die Elemente über der Array-Fläche schon Unterschiede in ihren ursprünglichen spektralen Empfindlichkeiten aufweisen. Hinzu kommt die fertigungsbedingte Exemplarstreuung der spektralen Empfindlichkeiten. Da in jedem einzelnen der Detektorelemente jeweils das Integral über den gesamten vom Detektor aufnehmbaren wellenlängenbereich gebildet wird, in das auch die spektrale Transmission der Projektionsoptik und ihrer erwähnten Anpassungsfilter mit eingehen, ist eine nachträgliche rechnerische Kompensation oder auch nur Korrektur der resultierenden Fehler für beliebige Strahldichteverteilungen des von der Anzeige kommenden Lichtes nicht möglich.

Die vorstehend exemplarisch für die Anpassung an die spektrale Hellempfindlichkeit des Auges geschildeten Probleme treten in noch stärkerem Maße auf bei dem Versuch einer Anpassung des Detektor-Arrays an die von der CIE normierten sogen. Tristimulus-Verläufe. Theoretisch kann auf diesem Wege der Drei- oder Vier-Filter-Methode zwar die Chromatizität (Buntheit) eines Meßobjektes bestimmt werden; in der Praxis besteht aber eine starke Einschränkung dieser Methode durch die großen Fehler aufgrund unterschiedlicher spektraler Verteilung des zu messenden Lichtes (vgl. H. Terstiege und D. Gundlach "Characterizing the Quality of Colorimeters" [SID 1991 Digest, p. 641]).

Von Nachteil bei jenen bekannten Meßeinrichtungen mit zusätzlicher Projektions-Optik ist ferner, daß durch die Verkleinerung der Interferenzfigur, nämlich für deren Gesamt-Projektion auf ein Detektor-Array, eine stärkere Mittelung über einander benachbarte Punkte auftritt. Das verschlechtert die Blickwinkel-Auflösung, da nun jeder einzelne Detektor des Array die Helligkeits- und damit die Kontrastwerte für mehrere einander benachbarte Betrachtungsrichtungen zusammenfaßt, bis die nächstfolgenden Richtungen wieder vom nächsten Detektor im Array erfaßt und zusammengefaßt werden.

In Erkenntnis dieser verschiedenen die Möglichkeiten meßtechnischen Praxis stark einschränkenden Gegebenheiten liegt der Erfindung die Aufgabe zugrunde, die gattungsgemäße Meßeinrichtung dahingehend weiterzubilden, daß sie nicht nur genauere sondern auch zusätzliche Informationen bereitzustellen erlaubt, die für eine exaktere visuelle Charakterisierung von elektrooptischen Anzeigen benötigt werden, ohne jedoch den apparativen und zeitlichen Aufwand dafür zu erhöhen.

Diese Aufgabe ist erfindungsgemäß im wesentlichen dadurch gelöst, daß gemäß dem Kennzeichnungsteil des Hauptanspruches nun keine Projektion der konoskopisch erzeugten Interferenzfigur auf eine in zwei Dimensionen regelmäßige Anordnung von Detektoren (zweidimensionales Detektor-Array) mehr erfolgt; sondern daß nun stattdessen einzelne photometrische und spektro-radiometrische Detektoren in der Ebene der Interferenzfigur selbst möglichst punktförmigen Flächenelemente (entsprechend den zugeordneten Betrachtungsrichtungen) nach Intensität und/oder Spektrum analysieren. Dafür können die einzelnen Detektoren entweder körperlich direkt in der Interferenzfigur angebracht sein, wobei ihre Lage in der bildseitigen Brennebene direkt einer ganz bestimmten Betrachtungsrichtung entspricht; oder das den interessierenden Betrachtungsrichtungen entsprechende Licht wird mittels optischer Konstruktionsmittel (Lichtleiteinrichtungen) wie Lichtleitfasern, Spiegeln oder Kombinationen daraus aus der Interferenzfigur ausgekoppelt und auf die abgesetzten aber örtlich zugeordneten Detektoren geführt. Eine Steigerung der Winkelauflösung wird durch Einkoppeln der Detektoren in die Interferenzfigur über Lichtleitfasern mit sehr geringem Querschnitt (z.B. 50 um und weniger) erzielt, auch mit Einzeldetektoren hinter Blenden und mit Kombinationen aus diesen beiden konstruktiven Maßnahmen.

Wieder bestimmt die Lage des Detektors bzw. des Anschlusses seiner konstruktiven Lichtleiteinrichtung in der Interferenzfigur die Betrachtungsrichtung relativ zur Elementarfläche der zu charakterisierenden Anzeige. Die flächige Ausdehnung des Detektors oder seines Anschlusses definiert den Raumwinkelbereich, aus dem die Strahlung im einzelnen Detektor integriert wird. Der Aperturwinkel des Detektors bzw. der entsprechenden Anschluß-Lichtleiteinrichtung in der Interferenzfigur bestimmt den Querschnitt des parallelen Elementarstrahlbündels, das in der bildseitgen Brennebene der Transformationsoptik interferiert.

Durch den Fortfall der Projektionsoptik wird der Aufwand an optischen Bauteilen reduziert und eine Reduktion von störenden Einflüssen erreicht, wie sie von jedem realen Linsensystem verursacht werden (wie z.B. Verzerrungen, Bildfeldkrümmungen, Streuungen, u.dgl.). Auch kann eine erfindungsgemäße Meßeinrichtung infolge Verzichts auf die Projektionsoptik kleiner aufgebaut werden; und der Ersatz von zweidimensionalen Array-Detektoren durch schnellere einkanalige radiometrische, spektro-radiometrische oder photometrische Detektoren eröffnet erstmals die Möglichkeit, auch alle dynamischen Vorgänge in der zu vermessenden Anzeige exakt zu erfassen. Wegen der geringen Anzahl an Einzeldetektoren läßt sich das gesamte Meßsystem leicht spektral kalibrieren und somit auch eine unproblematische Korrektur von eventuell vorhandenen systembedingten Nichtidealitäten erzielen, womit endlich eine genaue Messung auch der farbmetrischen Charakteristiken des Meßobjektes erreichbar ist.

Die Anzahl der Punkte, an denen mittels der individuellen Detektoren (oder deren Lichtleiteinrichtungen) die konoskopische Interferenzfigur direkt in der bildseitigen Brennebene der Transformationsoptik vermessen wird, kann also von mehreren tausend (wie im Falle des Array einer CCD-Kamera) auf eine vernünftige Anzahl reduziert werden. In der Praxis genügen durchaus schon größenordnungsmäßig etwa zehn solcher Punkte für eine hinreichend winkelauflösende Aussage über die Abhängigkeit der optischen Eigenschaften der zu vermessenden Anzeige von der Beobachtungsrichtung.

Die Anzahl solcher "Auswertungspunkte" kann über einen geometrisch weiten Bereich den jeweiligen aktuellen meßtechnischen Erfordernissen angepaßt werden. Für die diskreten, ausgewählten Punkte (also Betrachtungsrichtungen auf die Anzeige) wird durch die punktuelle Detektorzuordnung jedenfalls bereits eine im Vergleich zu den bisherigen Array-Methoden stark erhöhte Meßgenauigkeit für die tatsächlich interessierenden Betrachtungsrichtungen erreicht. Das gilt insbesondere für die Bestimmung von farbmetrischen Eigenschaften der Anzeige, weil nur noch ausgesuchte, definierte Betrachtungsrichtungen erfaßt werden.

Schließlich eröffnet die Erfindung auch die Möglichkeit, mittels gespaltener, konzentrischer oder unmittelbar beieinander in der Interferenzebene angebrachter Lichtleiter für diese eine, ganz bestimmte Betrachtungsrichtung gleichzeitig mehrere Detektoren unterschiedlicher Art anzuschließen. Das erbringt eine simultane Analyse auf unterschiedliche Qualitäten wie Leuchtdichte und daraus abgeleitetem Kontrast gleichzeitig neben spektraler Messung der farbmetrischen Eigenschaften bei parallel erfolgender Bestimmung auch der dynamischen Eigenschaften.

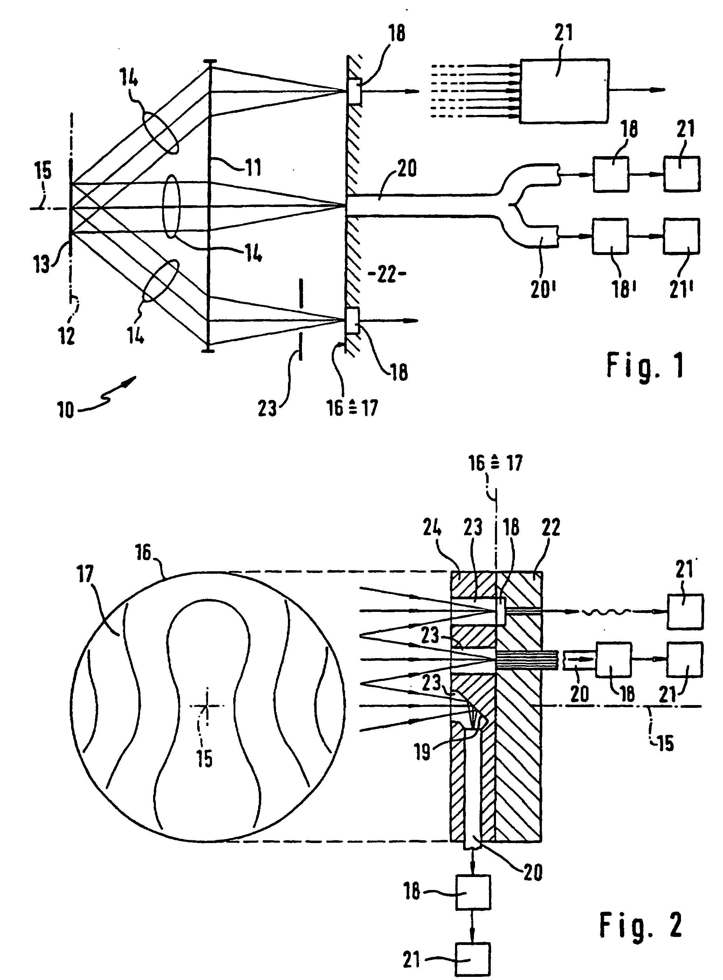

Weiterbildungen und Alternativen im Rahmen der Erfindung ergeben sich aus den weiteren Ansprüchen, aus der abschließenden Zusammenfassung und aus nachstehender Beschreibung der Zeichnung. In dieser zeigt
Fig.1 die erfindungsgemäße Meßeinrichtung axial-längsgeschnitten im Prinzipaufbau unter Berücksichtigung mehrerer Realisierungsmöglichkeiten für Detektoranschlüsse und
Fig.2 gegenüber Fig.1 weiter detailliertere Möglichkeiten für das Einkoppeln der Detektoren in die Interferenzfigur.

Die in der Zeichnung unter Beschränkung auf das Prinzipielle funktionell skizzierte Meßeinrichtung 10 nach vorliegender Erfindung weist als einzige Optik eine konvergente Transformationsoptik 11 auf. Diese ist mit ihrer optischen Achse 15 orthogonal zum Meßobjekt in Form einer ebenen Anzeigefläche 13 in der objektseitigen Brennebene 12 der Optik 11 ausgerichtet, welche somit ein durch die parallelen Elementarstrahlbündel 14 definiertes Flächenelement der Anzeige 13 erfaßt. Die von diesem Flächenelement in unterschiedliche Richtungen bzw. Neigungswinkel zur optischen Achse 15 ausgehenden konischen Bündel paralleler Elementarstrahlen 14 interferiren in direkt zugeordneten Punkten der bildseitigen Brennebene 16 und bilden so die eingangs erwähnte konoskopische Interferenzfigur 17. Diese wird auch als die Fouriertransformation des Flächenelementes bezeichnet, wie in der einleitend zitierten Dissertation näher dargestellt, worauf hier Bezug genommen wird.

Das vom Flächenelement auf der Anzeige 13 ausgehende konische Bündel von parallelen Elementarstrahlen 14 kann durch Reflektion, durch Transmission oder durch Emission von Licht an der Anzeige 13 entstehen. Diese Elementarstrahlbündel 14 repräsentieren die vom Auge eines menschlichen Betrachters wahrgenommenen visuellen Reize beim Betrachten des Flächenelementes der Anzeige 13 aus unterschiedlichen Richtungen.

Detektoren 18 werden in die bildseitige Brennebene 16 und damit direkt in die Interferenzfigur 17 eingekoppelt - entweder unmittelbar oder mittelbar etwa über Lichtleiteinrichtungen wie Spiegel 19 und/oder Lichtleiter 20 zur konstruktiven Strahlführung (im Gegensatz zur vorbekannten Projektion mittels Linsen oder Linsensystemen).

Die Flächenelemente, die durch die direkte Anordnung der Detektoren 18 bzw. durch deren Einkopplungen mittels der Lichtleiteinrichtungen definiert sind, müssen die Fläche der Interferenzfigur 17 nicht vollständig überdecken; je nach der Meßaufgabe und nach dem Meßobjekt (Anzeige 13) kann die Anzahl und die Lage der Anschluß- oder Meßpunkte in der Interferenzfigur 17 den jeweiligen Erfordernissen angepaßt werden. So wird man insbesondere die anwendungstechnisch kritischen Betrachtungsrichtungen einer Anzeige 13, also deren Flächenelement-Entsprechungen in der Interferenzfigur 17, mit einer erhöhten Dichte an Detektoren 18 bzw. Einkopplungen bestücken.

Für die Messung von strahlphysikalischen Intensitäten an verschiedenen Orten in der Interferenzfigur 17 (und für die Berechnung von entsprechenden Kontrastwerten aus den so für verschiedene elektrische Ansteuerzustände gemessenen Intensitäten) sowie für die Messung von dynamischen Effekten wie Schaltzeiten, Flicker u.dgl. handelt es sich bei den Detektoren 18 um kleinbauende, empfindliche und schnelle photo-elektrische Sensoren. Deren kleine lichtempfindliche Eintritts-Fläche, die gegebenenfalls noch durch aufgebrachte Blenden verringert wird, verhindert, daß über einen zu großen Bereich in der Umgebung des gewünschten Meßpunktes integriert und damit über Meßwerte gemittelt wird, die zu sehr unterschiedlichen Richtungen der Elementarstrahlbündel 14 (und damit Betrachtungsrichtungen auf die Anzeige 13) entsprechen.

Die Ausgangssignale mehrerer Detektoren 18 werden einer elektronischen Speicher oder Auswerteschaltung 21 zugeführt, in der, wie oben erläutert, z.B. die Blickrichtungsabhängigkeit von Kontrast (z.B. das Leuchtdichte-Kontrastverhältnis) berechnet wird, um dann in zweckentsprechender Form z.B. durch Isokontrastlinien dargestellt werden zu können. Solche Meßergebnisse können auch zur Güteklassifikation der Anzeige 13 dokumentiert oder beliebig weiterverarbeitet werden.

In der Interferenzfigur 17 einander unmittelbar benachbarte Meßpunkte können an unterschiedliche Detektoren 18, 18' und an unterschiedliche Auswerteschaltungen 21, 21' für unterschiedliche Meßaufgaben angeschlossen sein. Wenn aber an das jeweilige Flächenelement eines Meßpunktes in der Interferenzfigur 17 gleichzeitig unterschiedliche Detektoren 18, 18' und Auswerteschaltungen 21, 21' angeschlossen werden sollen, etwa auch für eine spektrographische Analyse zusätzlich zur Kontrastermittlung, dann wird das betreffende Flächenelement in der Interferenzfigur 17 zweckmäßigerweise durch einen gespaltenen Lichtleiter 20 realisiert, von dem ein Zweig 20' jener weiteren Auswertung 21' zugeordnet ist. So kann ein ganzes Bündel von abgespaltenen Lichtleitern 20' die Interferenzfigur 17 an einen gesondert aufgebauten (z.B. abbildenden) Simultan-Spektrographen anschließen, ohne daß dadurch die exakt zeitgleich stattfindende Ermittlung von Intensitäts- und Kontrastwerten für die exakt gleiche Betrachtungsrichtung beeinträchtigt würde.

Wenn der Aperturwinkel (öffnungswinkel) des Detektors 18 oder des Lichtleiters 20 zu groß sein sollte, kann jeweils eine Apertur-Blende 23 vorgesehen sein und damit der Aperturwinkel an die Erfordernisse hinsichtlich der Flächenelement-Größe angepaßt werden. Die Funktion von Blenden 23 kann auch durch Bohrungen in einer massiven, für Licht undurchlässigen Platte 24 vor einer Montagefläche 22 für die Detektoren 18, 18' oder deren Lichtleiter 20 realisiert sein, wobei dann die axiale Länge einer Bohrung und deren Durchmesser den wirksamen Aperturwinkel bestimmen. Das gilt entsprechend auch für die Lichtführung mittels eines möglichst dicht bei der Interferenzebene 16 angebrachten Spiegels 19, der größere konstruktive Freiheiten beim direkten oder indirekten Anschluß der Detektoren 18, 18' erlaubt.

## Patentansprüche

1. Meßeinrichtung (10), zur Erfassung optischer Eigenschaften einer elektro-optischen Anzeige (13), mit opto-elektronischen Sensoren zur Aufnahme eines Teiles einer in der bildseitigen Brennebene (16) einer Transformationsoptik konoskopisch erzeugten Interferenzfigur (17), **dadurch gekennzeichnet,**
**daß** die konoskopische Interferenzfigur (17) an diskreten, nach Maßgabe tatsächlich interessierender Betrachtungsrichtungen ausgesuchten Orten direkt in der Brennebene (16) der Transformationsoptik (11) punktförmig von einer - im Vergleich zu einem CCD-Detektorarray - geringen Anzahl einzeiner Detektoren (18, 18') vermessen wird.

2. Meßeinrichtung nach Anspruch 1, **dadurch gekennzeichnet,**
**daß** außer spektral integrierenden Detektoren (18) auch spektral analysierende Detektoren (18') vorgesehen sind.

3. Meßeinrichtung nach Anspruch 1 oder 2, **dadurch gekennzeichnet,**
**daß** von den in der Fokalebene ausgesuchten Orten gespaltene Lichtleiter (20, 20') zu abgesetzten aber ihnen örtlich zugeordneten, unterschiedlich arbeitenden Detektoren (18, 18') führen.

4. Meßeinrichtung nach einem der vorangehenden Ansprüche, **dadurch gekennzeichnet,**
**daß** vor einer Montagefläche (22) zur Halterung der den ausgesuchten Orten zugeordneten Detektoren (18, 18') und/oder der zu ihnen führenden Lichtleiteinrichtungen (19, 20) eine lichtundurchlässige Platte (24) zur Anpassung von Detektor- bzw. Lichtleiter-Eintrittsaperturwinkeln an unterschiedliche meßtechnische Anforderungen durch Ausbildung von Blenden (23) und/oder zur Halterung von Umlenk-Spiegeln (19) vorgesehen ist.

## Claims

1. A measurement device (10) for determining optical properties of an electro-optical display (13) comprising opto-electronic sensors for sensing a part of an interference figure (17) conoscopically generated in the image-side focal plane (16) of a transformation optical system, **characterised in that** the conoscopic interference figure (17) is measured at discrete locations which are sought in accordance with observation directions which are actually of interest, directly in the focal plane (16) of the transformation optical system (11) in point form by a number of individual detectors (18, 18'), which number is small in comparison with a CCD detector array.

2. A measurement device according to claim 1 **characterised in that** besides spectrally integrating detectors (18) there are also provided detectors (18') for spectral analysis.

3. A measurement device according to claim 1 or claim 2 **characterised in that** divided optical waveguides (20, 20') lead from the locations which are sought in the focal plane to detectors (18, 18') which are displaced but locally associated with them and which operate differently.

4. A measurement device according to one of the preceding claims **characterised in that** provided in front of a mounting surface (22) for holding the detectors (18, 18') associated with the sought locations and/or the light guide devices (19, 20) leading thereto is an opaque plate (24) for the adaptation of detector and optical waveguide entry aperture angles to different measuring procedure requirements by virtue of the provision of aperture means (23) and/or for holding deflection mirrors (19).

## Revendications

1. Dispositif de mesure (10) pour l'enregistrement de propriétés optiques d'un affichage électro-optique (13), comportant des capteurs optoélectroniques pour la reproduction d'une partie d'une figure d'interférence (17), produite de manière conoscopique, dans le plan focal (16) côté image d'une optique de transformation, **caractérisé en ce que** la figure d'interférence (17) conoscopique est mesurée ponctuellement, en des lieux discrets, choisis en fonction de sens d'observation d'intérêt réel, directement dans le plan focal (16) de l'optique de transformation (11), par un nombre réduit - par rapport à un ensemble de détecteurs (CCD) - de détecteurs (18, 18') individuels.

2. Dispositif de mesure selon la revendication 1, **caractérisé en ce que** sont prévus aussi, outre des détecteurs (18) à intégration spectrale, des détecteurs (18') à analyse spectrale.

3. Dispositif de mesure selon la revendication 1 ou 2, **caractérisé en ce que** des guides de lumière (20, 20'), séparés des lieux sélectionnés dans le plan focal, mènent à des détecteurs (18, 18'), fonctionnant différemment, qui sont décalés mais qui leur sont associés localement.

4. Dispositif de mesure selon l'une des revendications précédentes, **caractérisé en ce qu'**il est prévu devant une surface de montage (22), pour la fixation des détecteurs (18, 18') associés aux emplacements sélectionnés, et/ou des dispositifs de guidage de lumière (19, 20) menant à ceux-ci, une plaque opaque (24) pour l'adaptation d'angle d'ouverture d'entrée de détecteurs, respectivement de guides de lumière à des exigences différentes en matière de techniques de mesure, par réalisation de diaphragmes (23) et/ou pour la fixation de miroirs de déviation (19).
